(19) Europäisches Patentamt
European Patent Office
Office européen des brevets

(11)  **EP 3 241 816 A1**

(12)  **EUROPEAN PATENT APPLICATION**
published in accordance with Art. 153(4) EPC

(43) Date of publication:
08.11.2017  Bulletin 2017/45

(51) Int Cl.:
**C04B 35/653** (2006.01)

(21) Application number: 15875778.1

(22) Date of filing: 28.10.2015

(86) International application number:
**PCT/RU2015/000715**

(87) International publication number:
**WO 2016/108725 (07.07.2016 Gazette 2016/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority:  29.12.2014  RU 2014154031

(71) Applicant: (Obshchestvo S Ogranichennoy Otvetstvennost'Yu "Obedinennaya Kompaniya Rusal Inzhen-Erno-Tekhnologicheskiy Tsentr)
G. Krasnoyarsk 660111 (RU)
(72) Inventors:
• **GUSEV, Alexandr Olegovich**
**Krasnoyarsk 660036 (RU)**
• **SIMAKOV, Dmitriy Aleksandrovich**
**Krasnoyarsk 660077 (RU)**
• **SLUCHENKOV, Oleg Valentinovich**
**Krasnoyarsk 660125 (RU)**

(74) Representative: **Tobiasz-Dumania, Katarzyna et al**
**Baker & McKenzie**
**Krzyzowski i Wspolnicy sp. k.**
**Rondo ONZ 1**
**00-124 Warszawa (PL)**

(54)  **METHOD FOR PRODUCING MELT-CAST POTASSIUM FLUORINE-PHLOGOPITE**

(57)  The invention relates to the preparation of synthetic melted mica materials, and specifically relates to a stone casting process and to the composition of an initial feedstock, and may be used in the creation of novel types of stone casting in the metallurgical, mining/enrichment, refractory and construction industries. A method for producing melt-cast potassium fluorinephlogopite includes preparing feedstock by mixing mica-containing and fluorine-containing components, melting the produced feedstock, pouring the melt into a mold, allowing to sit, removing the casting from the mold, and cooling; according to the claimed invention, the mica-containing component consists of vermiculite (60-90 wt% and the fluorine-containing component consists of potassium cryolite 10-40wt%, wherein, the feedstock is melted via the sequential stepped heating thereof, and the feedstock is prepared by layering components, wherein the top layer of the feedstock consists of a mixture of components, and the melt is poured into a preheated mold. The use of the present invention allows for enhancing the chemical purity of the potassium fluorine-phlogopite, increasing the corrosion and erosion resistance of the material, and improving the accuracy of the chemical composition of the yielded product.

EP 3 241 816 A1

**Description**

The invention relates to the preparation of synthetic melted mica materials, and specifically relates to a stone casting process and to the composition of an initial feedstock, and may be used in the creation of novel types of stone casting in the metallurgical, mining/enrichment, refractory and construction industries.

The mineral fluorinephlogopite [$KMg_3(AlSi_3O_{10})F_2$] is a synthetic analog of the natural mica-phlogopite, wherein the hydroxyl anions $(OH)^-$ are replaced with fluorine ions $(F)^-$ having with the hydroxyl the same charge. The fluorinephlogopite material is manufactured using stone casting of mica-crystal materials and products based on it. The technology for fluorinephlogopite stone casting is based on temperature synthesis of an oxyfluoride melt including potassium, magnesium, silica, aluminum and other oxides, and fluorine ions. On oxyfluoride melt cooling and hardening, the cast structure of the material undergoes crystallization processes, which correspond to the cast alloy formation principles (in particular, zonal structure, shrinkage, and porosity). The fluorinephlogopite is strong, heat-, erosion-, and corrosion-resistant, and thanks to these properties it is used on the high-precision equipment in metallurgical applications.

Presently, there are several patents in the art related to the development of feedstock for stone casting melts for mica, stone, glass crystalline, silicate material production.

Patents SU 592762, IPC C03B1/00 published on 15.02.1978, RU 2058944, IPC C03B1/00 published on 27.04.1996, RU 2131853, IPC C03C10/06 published on 20.06.1999, RU 2152363, IPC C03C1/00, C03C1/02 published on 10.07.2000, RU 2281924, IPC C03C10/00, C03B19/06 published on 20.08.2006 are known. These inventions relate to the field of development of mixture and feedstock compositions used for an artificial production of synthetically cast glass, silicate, ceramic, fluorine mica materials, designed for the reduction of the initial component melting temperature. The drawbacks of these solutions include the use of expensive potassium silicofluoride and the use of potassium carbonate (a reaction of which with mixture components produces carbon dioxide emissions).

Also, the RU Patent 2130435, IPC C03C10/00, C04B35/653 published on 20.05.1999 is known. This invention relates to the change of the casting and crystallization technology of stone casting melts, and the economic benefit of the invention is to increase the casting yield. The drawback of this invention is that this economic benefit is highly specific, as production costs for raw material are still high and the production string and all the equipment requires a lot of energy.

The inventor's certificate of USSR 787381, IPC C03C 3/22 published on 15.12.1980 and the inventor's certificate USSR 992446, IPC C03C 3/22 published on 30.01.1983 are known. These inventions relate to the field of stone casting of sedimentary rock and technological raw material for cast mica-crystal material production. The aim of the inventions is to produce a fluorinephlogopite material of a high-tensile fine-crystalline homogeneous structure. As the claimed improvement, it is suggested to change melt crystallization properties by adding to the initial feedstock composition silicon carbide in the range of 3-7wt%. The drawback of the inventions is the risk of local concentrations of silicon carbide, which can appear at the mixture preparation stage. Also, a partial combustion of crystallization centers during melting and melt pouring out. There is still a need for a solution for energy intensity.

The patent SU 649669, IPC C03C published on 28.02.1979 is known. The invention relates to manufacturing stone castings, in particular to sedimentary rock compositions and technological raw materials, and can be implemented for stone casting production. The patent is aimed at increasing the corrosion resistance of products made of the potassium fluorophlogopite material by increasing the content of the fluoride component.

The RU Patent 2462415, IPC C03C10/16, C01B33/42 published on 27.09.2012 is known. The object of the invention is to reduce production costs for products and to reduce carbon dioxide emissions by replacing a component of the potassium carbonate initial mixture with potassium hydroxide.

A stone casting technology is known (Collection of scientific papers and articles "Stone casting problems", Malyavin A.G. Technological modes for shaped castings manufacturing from fluorosilicate melts, Kiev, Naukova Dumka, 1975, No. 342 3).

The drawbacks of these solutions include high labour- and energy intensity on the stage of charge material preparation (breaking, drying, lumping), and the energy-intensive melting process.

The RU Patent 2410349, IPC C04B28/30, C04B35/66 published on 27.01.2011 is known, suggesting a change of a fractional composition of the initial feedstock and a change of one of the initial components to increase temperature range for product usage. A method for producing melt-cast potassium fluorinephlogopite includes preparing feedstock by mixing mica-containing and fluorine-containing components; melting the produced feedstock; pouring the melt into a mold; allowing to sit: removing the casting from the mold; and cooling.

Because of its technical specs and the number of similar essential features, the known patent is selected as the closest analog (prototype). According to the known patent, as well as the inventive solution, it is possible to create combinations of initial feedstock. The drawback of this invention is the low corrosion and erosion resistance of the resulted fluorinephlogopite and the high production costs.

The object of the present invention is to reduce production costs by reducing the number of production stages and energy demands, simplifying the instrumentation, and mitigating risks at the crystallization stage.

The technical effect obtained by the present invention is in enhancing the chemical purity of the potassium fluorinephlogopite, increasing the material corrosion and erosion resistance, and improving the accuracy of the chemical composition of the yielded product.

The technical effect is achieved by that the method for producing melt-cast potassium fluorinephlogopite includes preparing feedstock by mixing mica-containing and fluorine-containing components, melting the produced feedstock, pouring the melt into a mold, allowing to sit, removing the casting from the mold, and cooling; the mica-containing component consists of vermiculite (60-90 wt%) and the fluorine-containing component consists of potassium cryolite 10-40 wt%, wherein, the feedstock is melted via the sequential stepped heating thereof, and the feedstock is prepared by layering components, wherein the top layer of the feedstock consists of a mixture of components, and the melt is poured into a preheated mold.

The method is completed with specific features helping to achieve the desired technical effect.

For feedstock preparation vermiculite in the form of expanded granules 0.7-8 mm, and potassium cryolite in the form of flaked plates 1-3mm (or grounded with particle size no more than 1 mm) can be used.

The feedstock heating can be performed stepwise: the first step up to 110°C, the second step up to 600°C, the third step up to 1150-1250°C.

The melt can be poured into a mold heated up to 800°C minimum.

The feedstock is melted at 1250°C.

The inventive method for stone casting production allows obtaining a potassium fluorophlogopite material having the required material purity by the content of the main fluorinephlogopite component ($KMg_3(Si_3Al)O_{10}F_2$) up to 99.9%. A composition simplicity in terms of raw material and an operating temperature range together allow controlling the content of the main fluorinephlogopite component $KM_3(Si_3Al)O_{10}F_2$ in the finished product in the range of 75 to 99% accurate within 0.1%.

As an initial feedstock for stone casting production, a two-component mixture is used, and each mixture component is prepared separately, but at the same time, it is widely used and cost-efficient. Table 1 shows percentages of chemical elements in the first component. The first mixture component (A) is vermiculite ($(Mg^{+2}, Fe^{+2}, Fe^{+3})_3 [(AlSi)_4O_{10}] \cdot (OH)_2 \cdot 4H_2O$), and is used at following element ratio, wt%:

Table 1

| $SiO_2$, % | MgO, % | $Al_2O_3$, % | $Fe_2O_3$, % | FeO, % | $K_2O$, % | $Na_2O$, % |
|---|---|---|---|---|---|---|
| 38–49 | 20–24 | 12–18 | 5–9 | 0–1.5 | 5–8 | 0–0.8 |

| CaO, % | $TiO_2$, % | $Cr_2O_3$, % | MnO, % | Cl, % | $CO_2$, % | S, % | $H_2O$, % |
|---|---|---|---|---|---|---|---|
| 0.7–1.5 | 1.5 | 0–0.5 | 0.1–0.3 | 0–0.5 | 0–0.6 | 0–0.2 | 5–11 |

Table 2 shows percentages of chemical elements in the second component. The second mixture component (B) is potassium cryolite ($KAlF_4$), the base substance (F+Al+K) percentage is no less than 98-99%, the element ratio is following, wt%:

Table 2

| F, % | Al, % | K, % | $Fe_2O_3$, % | $SO_4$, % | $H_2O$, % | the rest, % |
|---|---|---|---|---|---|---|
| 49-52 | 17-18 | 28-32 | up to 0.1 | up to 0.1 | up to 0.6 | up to 1 |

The raw material for the component A is used in the form of expanded granules with fractional composition 0.7-8mm. The raw material for the component B is used in the form of flaked plates sized in the range of 1 to 5mm or in the grounded form having a particle size no more than 1mm.

The main crystalline phase of this composition casting is potassium fluorophlogopite, which is a material that is corrosion- and erosion-resistant under the destructive effect of the vapor-gas phase and molten salts, and has high thermal stability at frequent and abrupt temperature changes. Upon mixing the two-component mixture, the mixture component - (A) can be used in the range of 60 to 90%, and the mixture component - (B) can be used in the range of 10 to 40%. Accordingly, the mixture components (A) and (B) are combined with the following relationship:

$$\frac{A}{B} = \frac{(60-90)\%}{(10-40)\%},$$

where A is vermiculite, B is potassium cryolite.

The ratio of A and B components in the initial feedstock defines physical and chemical properties of the resulted material (strength, elasticity, porosity, electrical conductivity, etc.). For example, the reduction of the (B) component in the claimed bounds increases material chemical purity by the main component $KMg_3(Si_3Al)O_{10}F_2$ and increases the mixture melting temperature, defines the chemical purity of potassium fluorinephlogopite and, correspondingly, its chemical resistance.

In accordance with the claimed solution, unlike the prototype, it is suggested to change fundamentally a raw material element in the initial mixture components compared with existing and patented technologies for production from the fluorinephlogopite material.

The process of initial feedstock preparation includes only the stage of weighting the components according to the selected proportional ratio of components and requirements to product operation parameters. After weighting feedstock components, the feedstock is loaded into a furnace. The feedstock is laid into the furnace chamber by layers: A-B-A-B-A and so on; the number of layers is defined by haft volume and height, and melt heat size, one layer width (A component) should not exceed 12 cm, and another layer width (B component) should not exceed 6cm. In either case, the top layer consists of the mixture of A and B components in the ratio, which corresponds to the melting ratio, and the top layer width should correspond to 1/10 of the total height of the mixture charging height. By implementing the top layer of deposited feedstock from the mixture of A and B components it becomes possible to ensure their high dissolution and interaction velocity, providing in the result the leak tightness of the deposited feedstock face, thus, providing a heat insulation effect, minimizing fluoride component evaporation and limiting an environment interaction. This method enables usage of rejected from previous meltings products, gates or fluorinephlogopite casting head. For this purpose, they are grounded in a crusher to fractions of 1-3mm, and the resulted product is remelted together with new feedstock and added as one lower layer but in the amount no more than 10 wt% with respect to the initial feedstock. Thanks to layering feedstock components (A and B) having claimed concentration and volume, the maximal melting temperature and chemical purity of the material in terms of the initial component is lowered.

The mixture component B (potassium cryolite) is developed into a liquid phase at 600-700°C, upon melting the cryolite flows down between particles of component A layer. When two phases contact each other, the component A is dissolved in the component B accompanied with chemical reactions, at the same time the melting temperature of the resulted compound increases and the crystallization begins. The cryolite melt surface is not opened, which minimizes fluorine component losses. Also, feedstock layering increases the area of contact between components, and melt reaction rate and homogeneity, correspondingly. If component B concentration is initially high (40 wt%), crystallization processes are minimized. During the feedstock deposition, in each layer component B melting and interaction with the component A takes place, and these processes are caused by the feedstock volume reduction. The deep melting of layers and formation of a fluorinephlogopite chemical compound in the melt occurs at 1150-1250°C. The higher the initial concentration of the component A, the lower process temperature.

The melting technology is based on the stepped feedstock heating for moisture removal from the raw material. The number of heating stages and heating rate depend on the feedstock charge surface area and on filling layer height. Often, it is efficient to melt feedstock according to the three-stage heating mode; for example, for a casting of 100-150kg it is recommended to use the following mode (if there is suitable equipment):

1) the first stage - heating at 75°C/hour up to 110°C,
2) the second stage - heating at 110°C/hour up to 600°C,
3) the third stage - heating at 250°C/hour at 1150-1250°C followed by melt deposition from a feedstock.

Once feedstock is melted, the melt is poured into crystallization molds corresponding to the desired product dimensions. Before the melt is poured out, molds are heat-insulated around the periphery and are heated to the temperature of 800°C minimum. The molds are filled with continuous melt, the casting from the feedstock is initiated at the stabilization temperature in the range of 1150-1250°C. When the casting is finished, the upper part of the mold is heat-insulated with the material that is inert to the melt at 900°C, such as: calcium silicate, vermiculite, termoizol. The mold is left until it is completely crystallized, and depending on the melt mass, the duration of the crystallization process can be from 24 to 72 hours. If small melt masses are used, thermal chambers (furnaces) or mixtures of the termite type must be used to form a monolithic product during the crystallization process.

For mold calculations, it is required to take into account surface tolerance requirements, for example, for smooth and nonporous surfaces it is necessary to include in calculations the workpiece thickness for machining operations.

Since the product surface crystallizes faster than its core, a skin having depressions and caverns is formed on the surface. When casting a salt melt from the furnace, it is recommended to use shaped molds (such as sand-and-clay mixtures, high-alumina concrete, fireclay castable) or reusable molds (graphite, metalized articles). Prior to its direct usage, each mold should be dried and heated to the temperature of 800°C minimum. With proper casting and crystallization technology a material structure can be achieved which would be homogeneous across the entire product width, but on the product surface still would be a skin of 2-4mm width. In the case of depositing a significant melt mass in a small furnace with a small shaft, a pre-deposition method is used to reduce the initial mixture volume.

Since a multidimensional production within a single production site can be achieved, it becomes possible to obtain a material with different physical and chemical properties. The following product properties can be varied: compression strength, thermal coefficient of linear expansion, heat-resistance, melting temperature (see Table 3).

Table 3

| Density, g/cm$^3$ | Compression strength, MPa | Operating temperature, °C | Chemical composition, % |
|---|---|---|---|
| 2.5-3.1 | 50-130 | 1000-1350 | 83-99.9 |

X-ray phase analysis and X-ray spectral analysis of material samples across the product width have shown a chemical match of the mineral phase of potassium fluorophlogopite with an overall variance of 0.1% relative to the predetermined parameter.

For example, Table 4 shows results of X-ray phase analysis, and Table 5 shows results of X-ray spectral analysis of sample №4 (with respect to the purity of 99.99%) of the products having different A and B components ratio within the initial feedstock.

Table 4

| Formula | Mineral Name | 1 | 2 | 3 | 4 |
|---|---|---|---|---|---|
| $CaF_2$ | Calcium fluoride (Fluorite) | | 0.2 | | |
| $TiO_2$ | Rutile | 1.0 | 0.3 | | |
| $NaAl_3Si_3O_{11}$ | Sodium alumino silicate | 10.1 | 0.55 | | |
| $KMg_3(Si_3Al)O_{10}F_2$* | Potassium fluorophlogopite (Fluorphlogopite) | 86.7 | 93.2 | 97.1 | 99.99 |
| $Ca_4Na_4(Al_{12}Si_{12}O_{48})$ | | | | | |
| $(Al(OH)_2)_{0.33}Al_2(Si_{3.67}Al_{0.33}O_{10})(OH)_2$ | Clay (Montmorillo) | | 0.8 | | |
| $KCa_4F(Si_2O_5)_4$*$8H_2O$ | Fluorapophyllite | | 1.1 | | |
| $NaAlSiO_4$ | Nepheline | | 0.35 | | 0.01 |
| $MgAl_2O_4$ | Spinel | | 1.2 | | |
| $MgF_2$ | Magnesium fluoride (Sellaite) | | 0.3 | 2.9 | |
| Mg2SiO4 | Olivine (Forsterite) | 2.2 | | | |
| * Depending on the composition of the initial components, various compounds can be added to the final product composition. | | | | | |

Table 5

| O | Si | Mg | Al | K | Fe | F | Na | Cr | Ca | Ni |
|---|---|---|---|---|---|---|---|---|---|---|
| 43.05 | 19.16 | 14.38 | 8.20 | 6.32 | 5.42 | 2.47 | 0.53 | 0.14 | 0.12 | 0.09 |

| Ti | Mn | Co | S | P | Cu | Zn | Zr | Rb |
|---|---|---|---|---|---|---|---|---|
| 0.06 | 0.04 | 0.01 | 0.0079 | 0.0031 | 0.0029 | 0.0024 | 0.0014 | 0.0007 |

The claimed method allows the following:

1) Complete elimination of the stage of preliminary preparation of mixture components for burdening, excluding from the process in the result such energy-intensive operations as breaking, drying, clumping, and yield. As far as disclosed components are commercially available on market and are ready-to-use

2) reduction of the melting temperature from 1450-1550°C to 1150=1250°C, and by this:

a) the instrumentation for the technological process is simplified, namely, it is possible to use for melting arc, induction and resistance furnaces at more acceptable prices,

b) energy demands for the heating stage are reduced,

c) the accuracy of the product chemical purity, which is achieved by means of:

- reduction of losses together with gaseous emissions of raw materials during heating and melting,
- uniform temperature distribution and feedstock deep melting,

d) the product quality and yield is improved by means of crystallization temperature gradient reduction,

3) Enhancement of product chemical purity in terms of the main component and low surface porosity ($\approx 0.15\%$), which in combination provides high erosion and corrosion material resistance.

4) The use of raw materials for industrial and low-cost production.

5) Reduction of risks of heterogeneity, voids in the product body at the crystallization stage due to the decrease in the temperature gradient at the melt-crystallization stage.

6) Achieving a variety of uses of products made of the resulting material, due to the ease of reconfiguring the process to change the properties of the cast material.

## Claims

1.  A method for producing melt-cast potassium fluorinephlogopite, including preparing feedstock by mixing mica-containing and fluorine-containing components, melting the produced feedstock, pouring the melt into a mold, allowing to sit, removing the casting from the mold, and cooling, **characterized in that** the mica-containing component consists of vermiculite 60-90 wt%, and the fluorine-containing component consists of potassium cryolite 10-40wt%, wherein, the feedstock is melted via the sequential stepped heating thereof, and the feedstock is prepared by layering components, wherein the top layer of the feedstock consists of a mixture of components, and the melt is poured into a preheated mold.

2.  The method according to claim 1, **characterized in that** for feedstock preparation vermiculite is transferred in the form of expanded granules 0.7-8mm, and potassium cryolite in the form of flaked plates 1-3mm or grounded to no more than 1 mm.

3.  The method according to claim 1, **characterized in that** the feedstock is heated in stages: the first step up to 110°C, the second step up to 600°C, the third step up to 1150-1250°C.

4.  The method according to claim 1, **characterized in that** the melt is poured into a mold heated up to 800°C minimum.

5.  The method according to claim 1, **characterized in that** the feedstock is melted at 1250°C.

## INTERNATIONAL SEARCH REPORT

| | International application No. |
|---|---|
| | PCT/RU 2015/000715 |

**A.   CLASSIFICATION OF SUBJECT MATTER**

### C04B 35/653 (2006.01)

According to International Patent Classification (IPC) or to both national classification and IPC

**B.   FIELDS SEARCHED**

Minimum documentation searched (classification system followed by classification symbols)

### C04B 35/622, 35/626, 35/653-35/66

Documentation searched other than minimum documentation to the extent that such documents are included in the fields searched

Electronic data base consulted during the international search (name of data base and, where practicable, search terms used)

### PatSearch (RUPTO internal), USPTO, PAJ, Esp@cenet, DWPI, EAPATIS, PATENTSCOPE

**C.   DOCUMENTS CONSIDERED TO BE RELEVANT**

| Category* | Citation of document, with indication, where appropriate, of the relevant passages | Relevant to claim No. |
|---|---|---|
| A, D | RU 2410349 C1 (ZAKRYTOE AKTSIONERNOE OBSHCHESTVO "SOIUZTEGSHOSTROI) 27.01.2011 | 1-5 |
| A | SU 220447 A1 (INSTITUT PROBLEM MATERIALOVEDENIIA AN UKRAINSKOI SSR) 28.06.1968 | 1-5 |
| A | SU 168261 A1 (SERGEEV-BOBR A. A. et al.) 18.02.1965 | 1-5 |
| A | CN 102617115 A (LV BAOLIN et al.) 01.08.2012 | 1-5 |

☐  Further documents are listed in the continuation of Box C.          ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 January 2016 (25.01.2016) | 04 February 2016 (04.02.2016) |

| Name and mailing address of the ISA/ | Authorized officer |
|---|---|
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 592762
- RU 2058944
- RU 2131853
- RU 2152363
- RU 2281924
- RU 2130435
- US 787381 A
- US 992446 A
- SU 649669
- RU 2462415
- RU 2410349